# EUROPEAN PATENT APPLICATION

(11) **EP 0 677 960 A2**
(43) Date of publication of application: **18.10.1995**
(21) Application number: 95105681.1
(22) Date of filing: 14.04.1995
(51) Int. Cl.: H04N 5/45, H04N 5/50

(54) **Television signal receiver with remote control with the possibility of simultaneously displaying a plurality of images corresponding to the same number of signals received.**

(30) Priority: 15.04.1994 IT TO940297
(71) Applicant: S.E.I. Società Elettronica Italiana S.p.A., I-40064 Ozzano Emilia (BO) (IT)
(72) Inventor: Berti, Luigi, I-40135 Bologna (IT)
(74) Representative: Dini, Roberto, Dr. Ing.

(57) **Abstract**

A television signals receiver is described, destined to be used together with an image display device, in particular incorporated in a television set, comprising a remote control device and able to display on said image display device at least two different images, a main image and a secondary one, corresponding to two receivable television signals; the main characteristic of the described receiver consists in that it provides a control circuit that allows, in following an appropriate command made by the user, to change the main image with the secondary one and to sequentially and in an automatic manner present, on said display device, a plurality of different main images, corresponding to the same number of receivable television signals.

## Description

The present invention refers to a television signals receiver, destined to be used together with an image display device, in particular incorporated in a television set, comprising a remote control device and able to display on said image display device at least two different images, corresponding to two receivable television signals.

A signals receiver as that described above is known; commonly known with the English term "picture in picture", usually abbreviated as PIP.

Such type of receivers, whose circuit may be contained in a television set or video recorder, or in any other type of apparatus able to manage television images, allow the user to simultaneously have before him two images corresponding to two different receivable television signals.

The aim of the present invention is that of illustrating how it is possible to improve this type of known receiver, so as to increase its comfort and ease of use.

For reaching such aims the present invention has as its subject a television signals receiver, destined to be used together with an image display device, in particular incorporated in a television set, comprising a remote control device and able to display on said image display device at least two different images, a main image and a secondary one, corresponding to two receivable television signals, characterised in that it provides a control circuit that allows, in following an appropriate command made by the user, to change the main image with the secondary one and to sequentially and in an automatic manner present, on said display device, a plurality of different main images, corresponding to the same number of receivable television signals.

Further aims and characteristics of the present invention shall result in being clear from the following description and annexed drawings, supplied purely as an explanatory and non limiting example, wherein:
- figure 1 schematically represents the electrical diagram of a receiver according to the invention;
- figure 2 represents the block diagram of the relevant part of the logic circuit of the control unit of the receiver of figure 1.

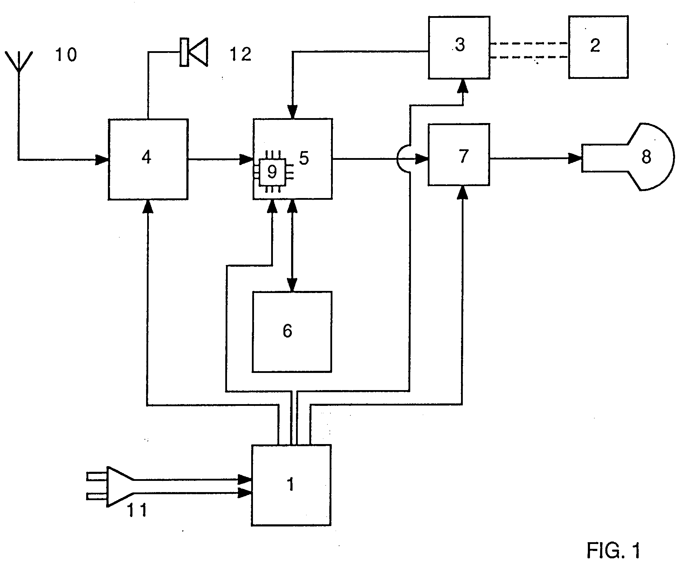

In figure 1 the electrical diagram of a receiver according to the invention is schematically represented.

Reference number 1 indicates the power module, i.e. the module that contains the power supply of the receiver; the module 1 is connected to the domestic mains network by way of a cable terminating in a plug 11; moreover the module is connected to various other modules of the receiver to which it supplies the appropriate voltage supply, in the known way; the module 1 comprises one or more power transformers for lowering the voltage and rectifying and levelling circuits for transforming the alternating voltage of the mains to direct voltage.

Reference number 2 indicates the remote control transmitter of the receiver, that has the purpose of transmitting to the receiver the commands made by the user; as is usually the case, said remote control is equipped with a command key board, comprising several keys; each key, when pressed, transmits a particular code to the receiver; the module 2 contains a dedicated integrated circuit, of one of the know types, for coding and transmitting the commands, under the form of impulses of infra-red rays to the receiver, by way of LED diodes.

Reference number 3 indicates the receiver module of the signals emitted by the transmitter of the remote control 2; the module 3 comprises a receiver element of infra-red rays and a dedicated integrated circuit that provides for decoding the signals received and sending them to the control unit of the receiver. However it is possible, rather than modules 2 and 3, to substitute or add as an alternative a command key board on the front of the apparatus.

Reference number 4 indicates a complex of circuits commonly known by the English term "front end"; the module in this case receives the television signals captured by the antenna 10 and provides for amplifying them, converting them to an intermediate frequency, to amplify them once again and to survey them, obtaining in this way the video and audio signals.

Reference number 5 indicates the central module, that represents the heart and brain of the receiver; this module contains several integrated circuits (in the present case made by ITT and named TPU-2735, VCU-2136, VPU-2204, DTI-2251, DPU-2553, SPU-2243, CCU-3000, ACP-2371) which provide for all the elaborations of the signal received by the module 4, i.e. separation and decoding the video signals, to digitise them, decoding and processing the colour signal, etc. The module 5 also contains the central control unit of the receiver, indicated with reference number 9, represented by the integrated circuit CCU-3000, in a dedicated version, for implementing the inventive concept.

Reference number 7 indicates the control module of the kinescope 8, that represents the image display device of the receiver, with three colour signals RGB, received by the module 5.

Reference number 6 indicates the PIP module, that provides, in the known way, for creating an image of reduced dimensions, and to insert such image in the main image; the smaller image is obtained by processing the signal coming from a second television broadcaster (for this reason the receiver must have double tuning capacity or to create such by using the eventual video recorder to which it is connected), i.e. memorising it and then re-reading it at a greater speed; the module 6 contains three integrated circuits (PIP-2250, SPU-2243 and VSP-2860) and is connected by a multiple cable ("bus") to the central module 5.

Reference number 12 indicates the reproduction system of the acoustic signals (one or more loudspeakers); the relative circuitry is contained in module 4.

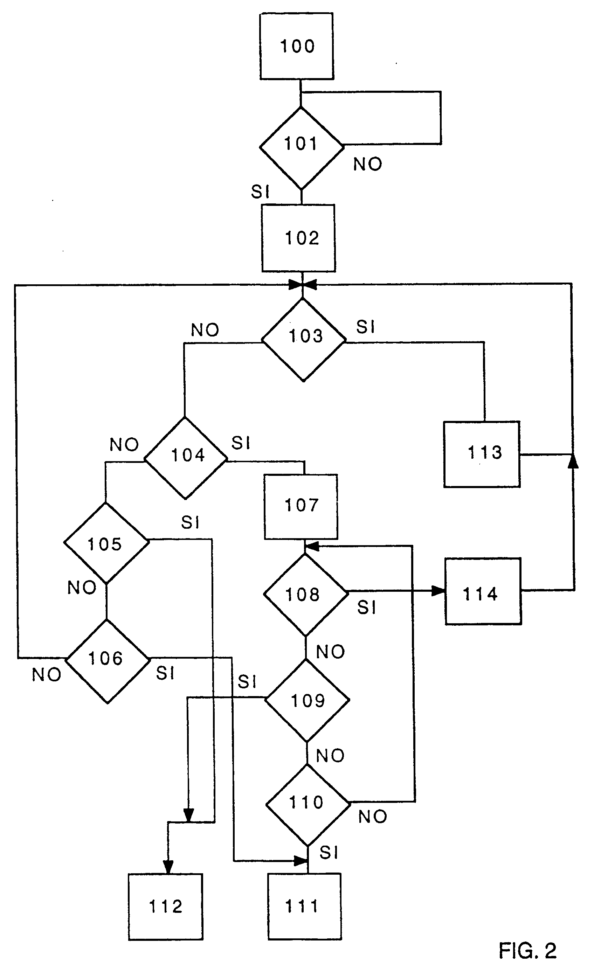

Figure 2 represents the block diagram of part of the logic control circuit contained in a dedicated central unit CCU-3000 according to the invention.

Reference number 100 indicates the starting block of the cyclic display function according to the invention; block 100 passes control to block 101.

Block 101 is a control block that verifies whether a determined key (ZAP) has been pressed on the remote control unit 2; in the affirmative case control passes to block 102, in the negative case control returns to block 101.

Block 102 provides for:
- activating the secondary image (PIP function);
- transferring the image that was displayed on the screen in the secondary image;
- tuning the receiver to the program corresponding to the key number 1 and
- displaying the relative image as the main image; control is then passed to block 103.

Block 103 is a control block that verifies whether 3 seconds have passed since it received control, in the affirmative case control passes to block 113, in the negative case control passes to block 104.

Block 104 is a control block that verifies whether a determined key (STILL) on the remote control unit 2 has been pressed; in the affirmative case control passes to block 107, in the negative case control passes to block 105.

Block 105 is a control block that verifies whether a determined key (ZAP) on the remote control unit 2 has been pressed; in the affirmative case control passes to block 112, in the negative case control passes to block 106.

Block 106 is a control block that verifies whether one of the following keys: TV, TEXT, SWAP, PIP, OFF (which command a change in the reproduced image) or the numeric keys 1 to 9 on the remote control unit 2 have been pressed; in the affirmative case control passes to block 111, in the negative case control passes back to block 103.

Block 107 provides for halting the program change, freezing the tuning on the last tuned program; control then passes to block 108.

Block 108 is a control block that verifies whether a determined key (ZAP) on the remote control unit 2 has been pressed; in the affirmative case control passes to block 114, in the negative case control passes to block 109.

Block 109 is a control block that verifies whether a determined key (ZAP) on the remote control unit 2 has been pressed; in the affirmative case control passes to block 112, in the negative case control passes to block 110.

Block 110 is a control block that verifies whether one of the following keys: TV, TEXT, SWAP, PIP, OFF (which command a change in the reproduced image) or the numeric keys 1 to 9 on the remote control unit 2 have been pressed; in the affirmative case control passes to block 111, in the negative case control passes back to block 108.

Block 113 provides for tuning the receiver to the program corresponding to the successive key (for instance if it was tuned to the program corresponding to key n.1, the program corresponding to key n. 2 is tuned); if the program corresponding to key n. 12 was tuned (last key available for memorising programs), the program corresponding to key n. 1 is tuned; control passes to block 103.

Block 114 provides for resuming the program changing sequence, passing the control to block 103.

Block 111 provides for cancelling the cyclic display function; the receiver remains tuned to the last selected program; the secondary image is cancelled and control passes to the initial block 100 or to another similar block in the general logic control circuit.

Block 112 provides for disabling the cyclic display function; thus cancelling the secondary image, the receiver remains tuned to the initial program, the one which was placed in the secondary image; control passes to the initial block 100 or to another similar block in the general logic control circuit.

The operation according to the described invention allows for, by using a single key of the remote control, (the ZAP key) for obtaining the following functions:
- pressing for the first time the ZAP key the program displayed on the main screen is automatically placed inside the secondary image (PIP) that, if disabled, is activated;
- on the main screen the programs memorised in the positions of the memory from 1 to 12 are sequentially displayed at intervals of 3 seconds, while the relative audio is reproduced in the loudspeaker, allowing the user to monitor other channels without loosing view of the previously followed main program, that remains active within the secondary image (PIP); if the user would however like to follow the audio of the secondary image, this is available in the socket for the earphones; in fact the central module 5 provides, every time that the PIP function is activated, to automatically switch the output for the earphones to the audio signal relative to the secondary image;
- upon reaching program 12 (last of the memorised programs) the sequence automatically resumes from program 1;
- at any time, by pressing for a second time the ZAP key on the remote control unit one returns to the initial situation, with the previously followed program on the main screen and the cancellation of the secondary image (PIP);
- during activation of the described function the STILL key remains active that, upon pressing it for a first time, allows the temporary suspension of the program scansion sequence for an indefinite amount of time, while upon pressing the key a second time the sequence resumes from the point in which it was suspended.
- during the sequential exploration, all the commands regarding the analog adjustments remain active (volume, sound, brightness, colour, etc.) being relative to both the main image and the secondary one; the secondary image can be moved without interrupting the sequence, using the normal command for moving it;
- the final interruption of the sequential exploration takes place, not only by pressing the ZAP key, but also by pressing other keys that modify the display of the images, such as TV, TEXT, SWAP, PIP, OFF or the numeric keys 1 to 9; in this case however the initial situation is not recalled, in the main image the program called with the numeric key appears and in the secondary image the image remains that was displayed before pressing the numeric key.

From the given description the characteristics of the receiver of television signals subject of the present invention result in being clear, as are also clear its advantages.

In particular the receiver of television signals according to the invention allows for automatically passing and viewing the available programs, without loosing view of the watched program; this obviously results in being useful especially when the transmission is interrupted by a series of publicity inserts.

Furthermore, the automatic channel exploration operation which takes place on the main screen, allows the user an optimal viewing of the images, while if this were to take place on the frame of the secondary image, the quality of the images would be notably inferior.

The described automatic exploration operation can be implemented in a television set, in a video recorder or, more in general, in any television signals receiver destined to function together with an image display device.

It is clear that numerous variants are possible to the television signals receiver subject of the present invention, without for this departing from the novelty principles inherent in the inventive idea, as it is also clear that in the practical realisation of the invention the materials and forms of the details illustrated may be different, and can be substituted with technically equivalent elements.

## Claims

1. Television signals receiver, destined to be used together with an image display device (8), in particular incorporated in a television set, comprising a remote control device (2) and able to display on said image display device (8) at least two different images, a main image and a secondary one, corresponding to two receivable television signals, characterised in that it provides a control circuit (9) that allows, in following an appropriate command made by the user, to change the main image with the secondary one and to sequentially and in an automatic manner present, on said display device (8), a plurality of different main images, corresponding to the same number of receivable television signals.

2. Television signals receiver, according to claim 1, characterised in that during said sequential exploration the program initially watched is not lost from view, inasmuch it is placed inside the secondary image.

3. Television signals receiver, according to claims 1 or 2, characterised in that said appropriate command is made by pressing a determined key (ZAP) on said remote control device (2).

4. Television signals receiver, according to claim 3, characterised in that said sequential exploration is interrupted and the initial situation is resumed by pressing said determined key (ZAP) a second time.

5. Television signals receiver, according to one or more of the previous claims, characterised in that said sequential exploration is temporarily suspended by pressing a second determined key (STILL) on said remote control device (2).

6. Television signals receiver, according to claim 5, characterised in that said sequential exploration is resumed from the point in which it was suspended, by pressing a second time said determined key (STILL).

7. Television signals receiver, according to one or more of the previous claims, characterised in that during said sequential exploration all the commands concerning the analog adjustments (volume, sound, brightness, colour, etc.) remain active being relative to both the main image and to the secondary image.

8. Television signals receiver, according to one or more of the previous claims, characterised in that said sequential exploration is definitively interrupted by also pressing other keys that modify the display of the images.

9. Television signals receiver, according to one or more of the previous claims, characterised in that during said sequential exploration the secondary image can be moved on the screen without interrupting the exploration.

10. Television signals receiver, according to one or more of the previous claims, characterised in that during said sequential exploration a change of the principle image takes place approximately every 3 seconds.

11. Television signals receiver, according to one or more of the previous claims, characterised in that during said sequential exploration the audio relative to the programmed viewed in the main image is reproduced.

12. Television signals receiver, according to one or more of the previous claims, characterised in that the audio relative to the secondary image is available through the earphone output appropriately provided with said television signals receiver.
